# EUROPEAN PATENT APPLICATION

(11) **EP 2 219 321 A1**
(43) Date of publication of application: **18.08.2010**
(21) Application number: 10152583.0
(22) Date of filing: 04.02.2010
(51) Int. Cl.: H04L 12/24, H04L 12/26

(54) **Scheduling of dynamically multiplexed services in a wireless network**

(30) Priority: 04.02.2009 US 149804 P
(71) Applicant: Nokia Corporation, 02150 Espoo (FI)
(72) Inventor: Koskinen, Henri Markus, 02600 Espoo (FI)
(74) Representative: Tognetty, Virpi Maria

(57) **Abstract**

Various example embodiments are disclosed relating to uniform scheduling of dynamically multiplexed services in a wireless network. According to an example embodiment, a technique may include determining, at a base station in a wireless network, that an amount of offered data for a service multiplex to be transmitted exceeds a radio resource reservation for the service multiplex, the service multiplex including a plurality of services; selecting one of the services for a packet drop based on a number of packets offered for each service and a number of packets previously dropped by the base station for each service; dropping a packet of the selected service; and transmitting the data for each service via an associated wireless bearer. Various criteria may be used to select one of the services for packet drop, such as a packet loss rate (or an adjusted packet loss rate), priority of the service, or other criteria such as a service identifier for each service.

## Description

### PRIORITY CLAIM

This application claims priority to US provisional patent application serial no. 61/149,804, entitled "Scheduling Of Dynamically Multiplexed Services In a Wireless Network," filed on 04 February 2009, hereby incorporated by reference in its entirety.

### BACKGROUND

Long-Term Evolution (LTE- this is evolution of UTRAN UMTS (Universal Mobile Telecommunication System) Terrestrial Radio Access Network) Multimedia Broadcast / Multicast Service MBMS (as defined in 3GPP -3^{rd} Generation Partnership Project) is planned to support Multimedia Broadcast Single-Frequency Network (MBSFN) operation, in which macro diversity gain is accomplished by transmitting exactly the same signals from all base stations (eNB - evolved Node B (LTE base station) belonging to an MBSFN Area.

An MBSFN Area may be defined as a set of cells transmitting synchronised data of the same MBMS service. For multicell reception to work properly in a terminal (UE) receiving the signal from an MBSFN, the same bits should be transmitted from all the eNBs belonging to the MBSFN within a time period defined by a cyclic prefix (CP) of the OFDM (Orthogonal Frequency Division Multiplexing) signal, signal propagation and inter-site distance.

During proper operation the signals from different participating cells combine in the terminal receiver in the same way as if they were multipath components originating from the same transmitter. If different bits are sent from different eNBs, the signals may interfere destructively. An eNB may transmit content from multiple MBSFNs and/or cell-specific content. MBMS can be provided either on a dedicated MBMS frequency layer or a mixed layer, where unicast transmission (including single-cell MBMS content) can be time-multiplexed with MBSFN transmission on the same frequency layer.

In 3GPP TS 22.246, "Multimedia Broadcast/Multicast Service (MBMS) user services; Stage 1(Release 8)", v. 8.3.0, March 2007 the requirement for channel change of MBMS-based TV service is given as follows:

- The MBMS service shall add no more than 1 second when switching between different TV streams to any delay introduced with regards to the coding of the TV stream.

- It shall be possible for an operator to configure the MBMS Television service so that the typical switching time, from the end user's perspective, does not exceed 2 seconds.

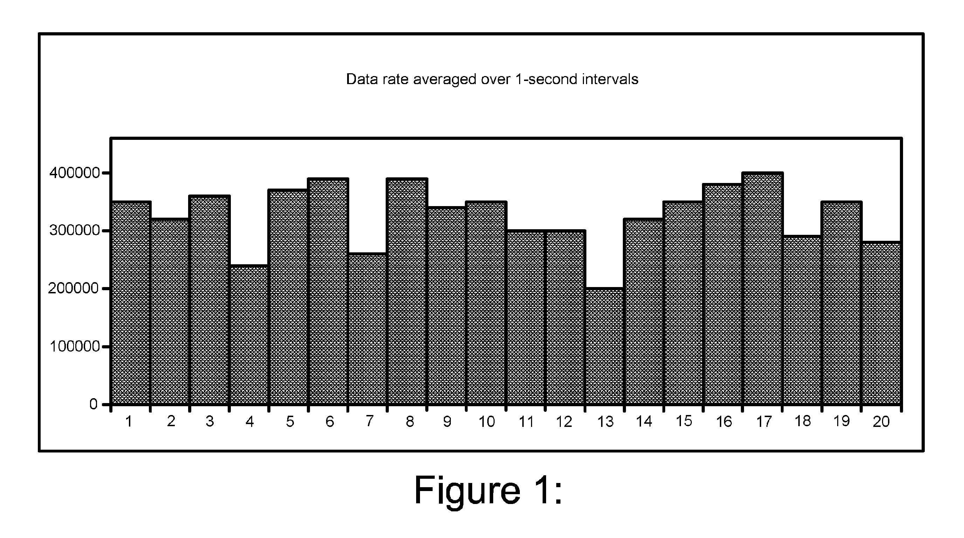

The data rate of an encoded video signal may be variable. H.264 (as defined by ITU International Telecommunication Union) is currently the only specified codec for WCDMA (Wideband Code Division Multiple Access) MBMS video streaming (including television) services. Even though content-based differences (amount of motion in video picture) mostly do not produce data rate variations after encoding, due to the somewhat unpredictable need to include "full picture" frames (also known as I-frames) there can be significant variations in the data rate of an encoded video signal. An example of this data rate variation is shown in Figure 1. Even though the stream was generated using a "Constant Bitrate" encoder setting, the maximum data rate was 403kbps, while average was 322 kbps.

Figure 1 shows a graph of data rate on the y axis against 1 second time intervals on the x axis. As can be seen, the data rate for each 1 second interval varies from interval to interval- that is the amount of data transmitted in a 1 second interval varies.

Due to the channel change requirement, the maximum I-frame interval (full picture required to start playback of the video stream) should be about 1 second. In order to ensure transmission of the I-frame within one second, buffering or traffic shaping of data is arranged so that the 1 second averaging period is not exceeded. In order to transmit the data shown in Figure 1 the TV service can either be served by a variable bitrate connection, or transmission resources of about 25% above average level can be reserved, resulting in significant wasting of radio resources. As the data rates of different TV channels are normally uncorrelated, multiplexing of multiple MBMS services tends to stabilize the aggregate data rate.

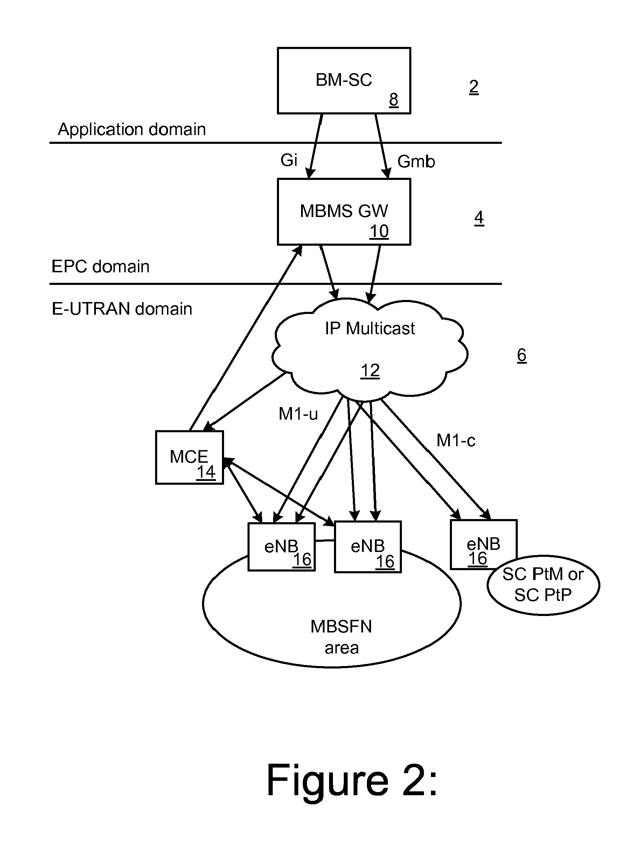

Full E (evolved)-MBMS architecture, as discussed in RAN WG3 (Radio Access Network Working Group 3), is shown in Figure 2. As schematically shown in Figure 2, there are three domains: the application domain 2, the EPC (Evolved packet core) domain 4 and the E-UTRAN (Evolved UTRAN) domain 6. The application domain comprises a BM-SC 8 Broadcast Multicast Service Centre responsible for the delivery of MBMS services. The BM-SC is a source of MBMS content such as TV transmissions. It can be used with various different radio access technologies, at the same time. The EPC domain comprises a MBMS gateway GW 10. The E-UTRAN domain 6 comprises an IP (Internet Protocol) multicast functionality 12 for multicasting data, a coordinating control-plane node MBMS Control Entity (MCE) 14 and a plurality of eNBs (or base stations) 16.

The BM-SC 8 is arranged to communicate with the MBMS GW 10. The MBMS GW 10 is arranged to be connected to the IP Multicast functionality and to the MCE 14. The MCE 14 is connected to at least some eNBs 16 but not necessarily all of the eNBs 16. The MCE 14 will be connected to the eNBs (or base stations) in the defined MBSFN area. The MCE 14 is also arranged to be connected to the IP multicast functionality 12. The IP multicast functionality 12 is connected to the eNBs 16.

The BM-SC 8 provides user-plane broadcast data to the MBMS GW 10 which in turn provides signals to the IP multicast functionality 12. The IP multicast functionality 12 provides signals to the eNBs 16 and the MCE 14. The MCE14 provides signals to the MBMS gateway 10. The MCE 14 is arranged to have the function of allocation of the radio resources used by all eNBs in the MBSFN area for multi-cell MBMS transmissions using MBSFN operation.

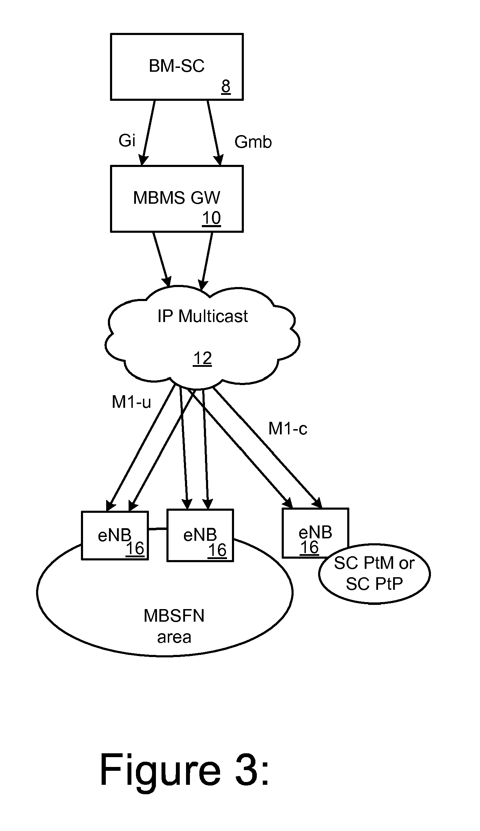

Reference is made to Figure 3 which shows the so called "Lightweight MBMS deployment", where the MCE as a separate node is omitted. This is to provide a simplified architecture compared to the arrangement of Figure 2. As can be seen from a comparison between Figure 2 and 3, the architectures look similar apart from the omission of the MCE entity. One of the limitations of a lightweight deployment is that it does not support frequent allocation and re-allocation of radio resources. Therefore variable bitrates are not supported as a centralized function.

With a full E-MBMS architecture, support of bitrate variation for every scheduling period may require very frequent signalling between the MBMS GW 10 and MCE 14. The MBMS GW 10 would need to indicate for every scheduling period the offered amount of data for every MBMS service, and the MCE 14 would need to indicate allocated capacity for each MBMS service.

### SUMMARY

According to an example embodiment, a method may include determining, at a base station in a wireless network, that an amount of offered data for a service multiplex to be transmitted exceeds a radio resource reservation (or allocated capacity or reserved capacity) for the service multiplex, the service multiplex including a plurality of services; selecting one of the services for a packet drop based on a number of packets offered for each service and a number of packets previously dropped by the base station for each service; dropping a packet of the selected service; and transmitting the data for each service via an associated wireless bearer.

According to an example embodiment, an apparatus may include a processor, the processor configured to: determine, at a base station in a wireless network, that an amount of offered data for a service multiplex to be transmitted exceeds a resource reservation (or reserved resources or reserved or allocated capacity) for the service multiplex, the service multiplex including a plurality of services; select one of the services for a packet drop based on a number of packets offered for each service and a number of packets previously dropped by the base station for each service; drop a packet of the selected service; and transmit the data for each service via an associated wireless bearer.

According to another example embodiment, a method may include determining, at a base station in a wireless network, that an amount of offered data for a service multiplex to be transmitted exceeds a radio resource reservation or reserved capacity for the service multiplex, the service multiplex including a plurality of services; determining a current packet loss rate for each of the services; selecting one of the services for a packet drop based on the current packet loss rate and a priority for each of the services; dropping a packet of the selected service; and transmitting the data for each service via an associated wireless bearer.

According to another example embodiment, an apparatus may include a processor, the processor being configured (e.g., programmed) to: determine, at a base station in a wireless network, an amount of offered data for a service multiplex, the service multiplex including a plurality of services; determine if the amount of offered data for a scheduling period exceeds a radio resource reservation or reserved capacity for the service multiplex; transmit the offered data for each of the services via an associated bearer without dropping a packet if the amount of offered data does not exceed the resource reservation or reserved capacity for the service multiplex; and perform the following if the amount of offered data for the service multiplex exceeds the resource reservation or allocated or reserved capacity: select one of the services for a packet drop based on a packet loss rate for each service for the scheduling period; drop a packet of the selected service; and transmit the offered data for each of the services via an associated bearer, including transmitting the data for the selected service after dropping the packet.

According to an example embodiment, a method may include determining, at a base station in a wireless network, an amount of offered data for a service multiplex, the service multiplex including a plurality of services; determining if the amount of offered data for a scheduling period exceeds a radio resource reservation or allocated or reserved capacity for the service multiplex; transmitting the offered data for each of the services via an associated bearer without dropping a packet if the amount of offered data does not exceed the radio resource reservation or capacity for the service multiplex; and performing the following if the amount of offered data for the service multiplex exceeds the radio resource reservation or capacity: selecting one of the services for a packet drop based on a packet loss rate for each service for the scheduling period; dropping a packet of the selected service; and transmitting the offered data for each of the services via an associated bearer, including transmitting the data for the selected service after dropping the packet.

According to another example embodiment, a method may include determining, at a base station in a wireless network, that an amount of offered data for a service multiplex to be transmitted exceeds a radio resource reservation for the service multiplex, the service multiplex including a plurality of services; determining a priority for each of the services; selecting one of the services for a packet drop based on: the priority for each of the services as a first criteria, and an identifier associated with each service as a secondary criteria if the services of the service multiplex have a same priority; dropping a packet of the selected service; and transmitting the data for each service via an associated wireless bearer.

An apparatus may include a processor, the processor configured to: determine, at a base station in a wireless network, that an amount of offered data for a service multiplex to be transmitted exceeds a radio resource reservation for the service multiplex, the service multiplex including a plurality of services; determine a priority for each of the services; select one of the services for a packet drop based on: the priority for each of the services as a first criteria, and an identifier associated with each service as a secondary criteria if the services of the service multiplex have a same priority; drop a packet of the selected service; and transmit the data for each service via an associated wireless bearer.

The details of one or more implementations are set forth in the accompanying drawings and the description below.

### BRIEF DESCRIPTION OF THE DRAWINGS

Figure 1 shows an example of H.264 encoded video data rate averaged over 1-second intervals;

Figure 2 schematically shows a full E-MBMS Architecture;

Figure 3 schematically shows a "Lightweight" E-MBMS deployment;

Figure 4 shows schematically a Protocol stack indicating the termination points of the "SYNC" protocol;

Figure 5 shows a data burst of one MBMS service with headers;

Figure 6 shows an example of multiplexing and scheduling configuration on a dedicated MBMS frequency layer;

Figure 7 shows an example of multiplexing and scheduling on a mixed unicast/MBMS frequency layer;

Figure 8 shows a flowchart of dynamic service multiplexing scheduling in which the Guaranteed Bit Rate GBR of each service is taken into account;

Figure 9 shows an example of service multiplexing within a dynamic multiplexing environment;

Figure 10 shows a High-Level MAC (Medium Access Control) and RLC (Radio Link Control) PDU (Protocol Data Unit) structure used in embodiments of the invention;

Figure 11 show a Length Indicator optional extension;

Figure 12 shows a MBMS Service ID (Identifier) option extension;

Figure 13 shows an example of a MAC- and RLC-PDU;

Figure 14 shows schematically an architecture embodying the present invention; and

Figure 15 shows an example of a SYNC protocol header structure.

Figure 16 is a flow chart illustrating operation of a base station according to an example embodiment.

Figure 17 is a flow chart illustrating operation of a base station according to another example embodiment.

Figure 18 is a flow chart illustrating operation of a base station according to yet another example embodiment.

Figure 19 is a block diagram of a wireless node according to an example embodiment.

Figure 20 is a flow chart illustrating operation of a base station according to yet another example embodiment.

### DETAILED DESCRIPTION

For purposes of illustration, the teachings and embodiments described herein may be implemented in an environment related to UTRAN Long-Term Evolution (LTE which is also known as 3.9G or Evolved UTRAN) and provision of Multimedia Broadcast / Multicast Services (MBMS) therein. However, these UTRAN LTE examples are merely example embodiments, and the disclosure is not limited thereto. While the present disclosure may use some of the terminology or examples from UTRAN LTE or other wireless standards, aspects or techniques of the present disclosure may be applicable to any appropriate networking or wireless technologies or standards, such as one or more standards or specifications related to Wireless Local Area Network (WLAN) and/or Worldwide Interoperability for Microwave Access (WiMAX), or others.

In embodiments of the invention, participating eNBs (or base stations) may be provided with enough information to be able to perform the final scheduling of multiplexed services locally, while ensuring uniform operation among all the eNBs belonging to the same MBSFN.

In some cases, the multiplexing of several MBMS services into one radio bearer in a centralized node (e.g., where radio bearer may have a fixed data rate) has problems because (1) the bitrate can be guaranteed only for the combination of services and not an individual service, resulting in the problem that if the TV channels, which are scheduled first, exceed their average data rates, there may be no capacity (or resources) left for the TV channels scheduled last and (2) a UE (user equipment or mobile station) must typically receive the whole multiplexed radio bearer, even if it only wants one TV channel, resulting in increased receiver activity and power consumption.

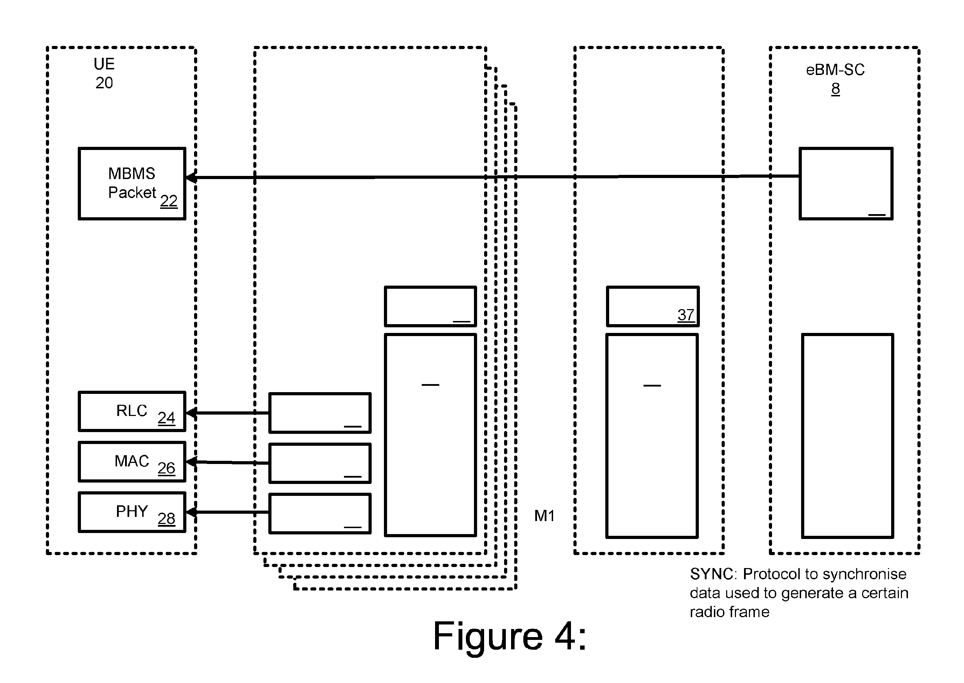

Figure 4 shows the termination points of a "SYNC" (synchronisation) protocol. The arrangement shown in Figure 4 comprises user equipment UE 20 which is connected to eNBs 16 which are in turn connected to the MBMS GW 10 which is connected to the BM-SC 8 in a similar way to the arrangement shown in Figures 2 and 3. This arrangement is such that the BM-SC 8 can connect to the UE 20 via the MBMS GW 10 and the respective eNBs 16, and the eNBs 16 can connect to the MBMS gateway.

The UE comprise an application layer utilizing received MBMS packets 22, a RLC layer 24, a MAC layer 26 and a PHY (physical layer) 28. The eNB comprises a RLC layer 30, a MAC layer 32 and a PHY layer 34. The RLC layers 24 and 20, the MAC layers 26 and 32, and the PHY layers 28 and 34 are respectively arranged to communicate with the corresponding layer in the other entity. The connection between the UE and the eNB will be via a wireless connection. The eNB 16 also has a SYNC protocol 36 and TNL (transport network layer) functionality 38. The MBMS GW 10 comprises corresponding SYNC 37 protocol and TNL functionality 39. The SYNC protocol is to synchronize data used to generate a certain radio frame.

The BM-SC 8 comprises an application layer 40 transmitting MBMS packets 40 and a TNL function 42. The application layer 40 is arranged so that it communicates with the UE MBMS application layer 22.

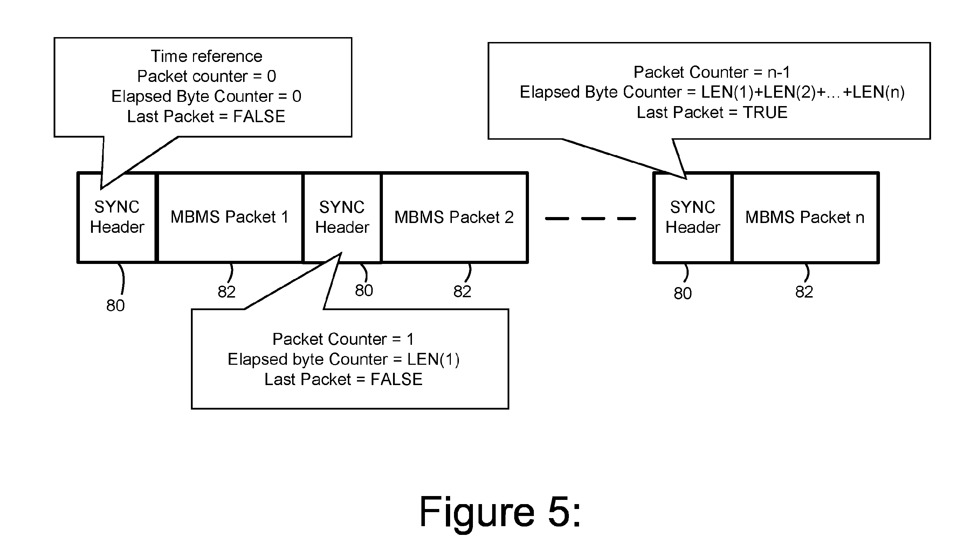

The assumption is that the SYNC protocol in the MBMS GW 10 adds suitable information for transmission over the Ml_u interface for participating eNBs to support content synchronization. The information for transmission across the Ml_u interface is illustrated in Figure 5 where a SYNC header 80 is followed by a MBMS packet 82. The requirements for the SYNC protocol can be summarized as, for example:

1) Participating eNBs get the information they need to synchronize the transmission of the same data to the same physical layer resource.

2) An eNB must be able to recover after lost or delayed data already within a scheduling burst. Impacted transport blocks are muted, transmission resumes from the next transport block, for which the complete information is available.

Aspects of the SYNC protocol are summarized as follows: Data is assumed to be transmitted in separable bursts in a periodical fashion, the time interval defining a period denoted as a scheduling period. The amount of data in a burst is that needed by an MBMS service during one scheduling period. If MBMS services are purely time-multiplexed with each other, the data bursts are sent from each active MBMS service (on the same frequency layer) after each other, and after one scheduling period, a subsequent burst of the first service would be provided.

The "SYNC" protocol in the gateway (GW) attaches extra information to the IP-packets of each MBMS service to facilitate content synchronisation.

The beginning of the burst for each service carries a timestamp (Time reference). This timestamp is understood by all participating eNBs. The timestamp also works as an implicit start-of-burst indicator so that the eNB becomes aware that a new burst is starting. If network transmission is accurate enough, the timestamp indication can also be implicit. This is included in the header 80.

A packet counter information element inserted to every packet header counts the number of packets- this in included in the header 80.

An octet counter element inserted to every packet header counts the number of elapsed octets cumulatively. In different variants this octet counter may or may not be reset for every packet burst. This is included in the header 80.

Header 80 of the last packet of the burst includes a special "Last packet" indicator flag.

If the segmentation and concatenation function built into the RLC/MAC protocol in eNBs follows the principle of adding exactly one length indicator element per RLC SDU (Service Data Unit), the receiving eNB can compute both the exact amount of lost data and the length of the transport blocks that would have been created, resulting in successful recovery from data loss on the M1-u interface (interface or link between eNB and IP multicast 12 or other network control entity). The impacted eNB may typically mute its transmission during the period when the lost data would have been transmitted. Synchronized transmission can be resumed from such a radio subframe onwards, for which complete data is available. The SYNC protocol supports the situation that if data is lost it is possible to continue transmitting from the point onwards for which content is available. The SYNC protocol means that the length of time to be skipped in known. The SYNC protocol is synchronizing the transmissions through various eNBs.

In some embodiments means are provided to efficiently support variable bitrate through dynamic sharing of radio resources in a distributed architecture. For this, a hybrid scheme may be used:

A multicast / broadcast service multiplex is defined. The multiplex may only contain services, which are broadcast over the same MBSFN Area, i.e. are transmitted from exactly the same eNBs and cells. Dynamic sharing of radio resources is possible within a service multiplex.

Information of each MBMS service in the multiplex, e.g., the transmission order of services within the multiplex and the priority and guaranteed bitrates of each service, is communicated to all participating eNBs.

For each service multiplex, a synchronisation protocol (SYNC) inserts elapsed octet and elapsed packet counters over the whole service multiplex. In some implementation variants described later, there may also be separate elapsed octet and elapsed packet counters over each individual MBMS service. Identifiers for linking together all the packets of a dynamic multiplex (such as a multiplex ID) and/or uniquely separating each MBMS service within the multiplex (such as MBMS Service ID) may be provided to the eNBs.

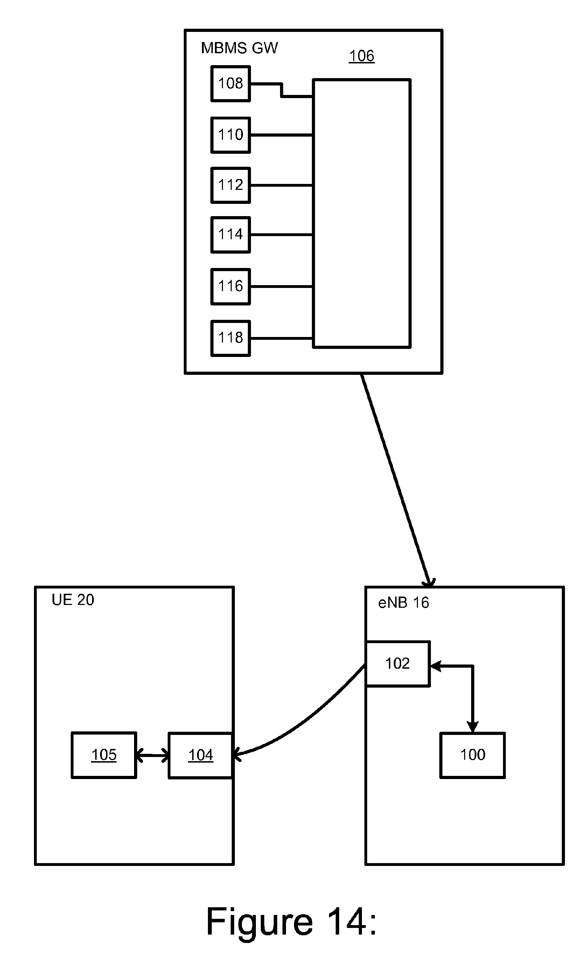

All offered data belonging to said service multiplex may be sent to participating eNBs (or base stations). The eNBs contain as shown in Figure 14 a processor 100 to process and schedule the data based on pre-configured rules and a semi-statically configured radio resource allocation, into which the service multiplex must be fitted. The eNBs will decide which data will be transmitted based on the configured information. This is done by the processor 100 or another entity or functionality. The eNBs 16 will also signal the scheduling of each service in the multiplex to the UEs 20 so that they only need to receive data for the MBMS service, which they are interested in. The processor will provide this information to the radio transceiver 102 which transmits this information which is received by the transceiver 104 of the UE 20.

If scheduling information is transmitted over the air interface as MBSFN transmission, requiring it to be bit-exactly the same from every eNB, the eNBs should have correct knowledge of the total amount of packets and data from each service in a service multiplex. The probability of correct transmission of the amount of data and amount of packets per multiplexed MBMS Service on the Ml_u interface may be improved by repeating the total octet- and packet counters per scheduling period and per service one or more times after all the data for the service has been forwarded as a part of the SYNC protocol. This is to ensure that the scheduling message from all eNBs become identical even if the eNBs do not all receive complete service data.

According to example embodiments, the granularity of semi-static scheduling can be defined either in time, in frequency, or in time and frequency blocks of suitable size. In current E-UTRAN specifications frequency multiplexing is possible only among MBSFN-transmitted services destined to the same MBSFN Area. Thus in embodiments of the invention proposed to be used with the E-UTRAN as currently specified, it may be that only dynamic scheduling is applicable for frequency multiplexing MBSFN-transmitted services. In this scenario semi-static frequency multiplexing between services may not be necessary although semi-static frequency multiplexing may have applications in alternative embodiments of the invention. A system embodying the present invention may support both semi-static and dynamic allocations. Semi-static borders separate at least the group of single-cell services, and each different MBSFN Area. Dynamic allocations are preferably only possible between services of a service multiplex, all of which must be broadcast over the same MBSFN Area, according to an example embodiment.

The scheduling between semi-static blocks may be accomplished by, for example, the centralized network control entity such as the MBMS gateway: A separable stream of IP-packets with header information is formed for each of these semi-static areas. If the data for a semi-statically allocated resource does not completely use the resource, the remaining allocation (complete transmission time intervals (TTIs)) can be used for unicast services on a mixed MBMS carrier (subject to the availability of suitable unicast data).

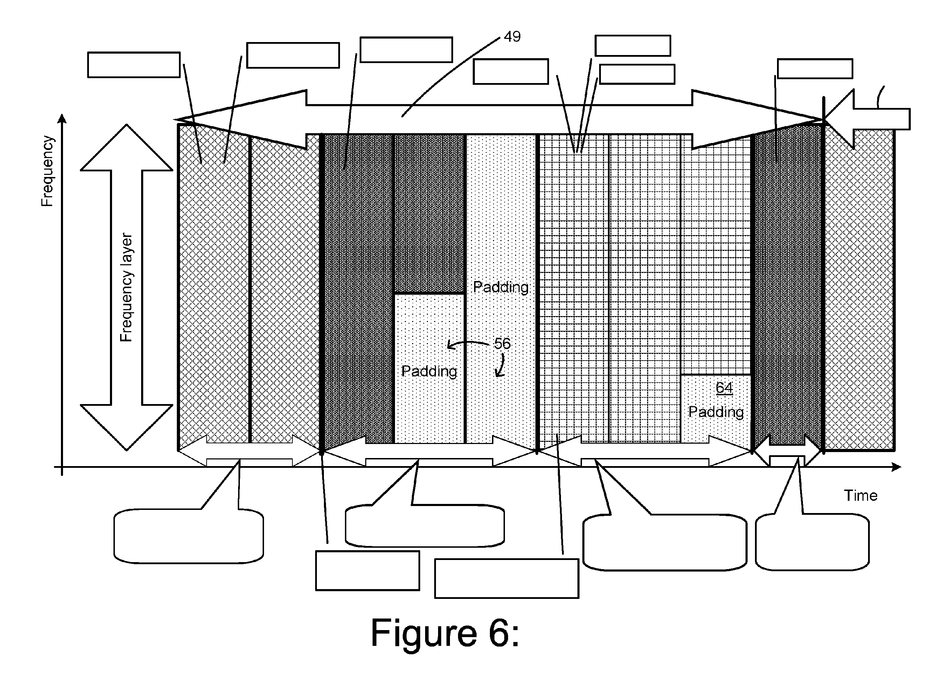

A simplified example configuration for a dedicated MBMS frequency layer is depicted in Figure 6 which shows a first scheduling period 49. Services 1 and 2, denoted by reference number 50 and 52 respectively, are destined to a single cell and can be dynamically multiplexed, but as their scheduling could also be handled completely locally in the eNB, no SYNC protocol is required.

Service 3, denoted by reference number 54, has MBSFN area 1 dedicated to it, and therefore is not dynamically multiplexed with any other services. If the instantaneous data rate is lower than the semi-statically reserved capacity (or reserved resources or resource reservation), padding 56 is inserted.

Services 4, 5 and 6, reference 58, 60 and 62 respectively, are sent to the same MBSFN Area and can therefore be dynamically multiplexed as proposed by embodiments of the present invention. If the total offered amount of data does not fill the allocated capacity (or resource reservation or reserved resources), padding 64 is inserted.

Service 7, referenced 66, again targets a dedicated MBSFN Area and is not dynamically multiplexed. After the last service of the scheduling period 49, a new scheduling period 68 starts.

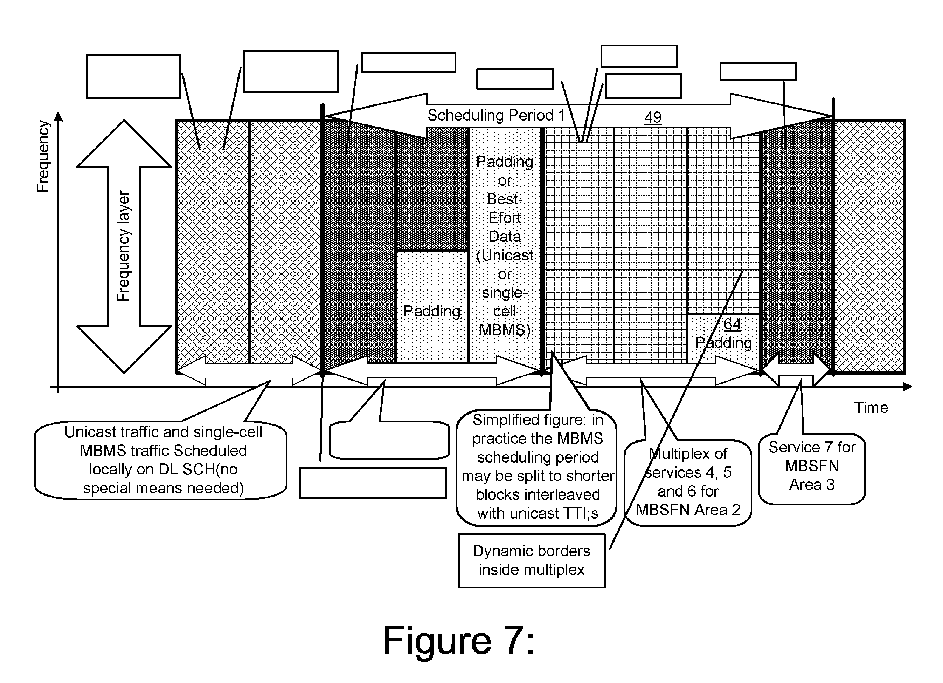

A corresponding image for a mixed frequency layer, where both unicast and MBMS traffic can be provided, is shown in Figure 7. Now the single-cell TTIs are actually unicast TTIs, where single-cell MBMS traffic can be sent on the DL-SCH (Downlink

Shared Channel as opposed to Multicast Channel (MCH), which is used for MBSFN transmissions). The multiplexing between unicast services and single-cell MBMS services can be completely dynamic without a centralized SYNC-protocol Another difference to the dedicated carrier case is that now unicast-data (if available) can utilize the unused capacity (or unused reserved resources) of service 3, since a complete TTI has been left unused. In other words instead of inserting padding, the time may be used to insert another (single-cell) service. This is because the length of time available is long enough for it to be used for a unicast service. It should be appreciated that in some embodiments of the invention, padding will be retained.

Thus MBMS service 1 is sent as unicast traffic on the DL-SCH. In other words if a MBMS service is intended for only one or some of the MBSFN cells, then the service can be sent on a DL-SCH. As can be seen from Figure 7, services 3 to 7 are generally as described in relation to Figure 6, except as described above.

For the service multiplex (for example services 4, 5 and 6 in the embodiment described in relation to Figures 6 and 7) all the offered data of each service is sent to the participating eNBs - even if the total aggregate amount of data may exceed the semi-static allocation of the service multiplex. The octet counter and packet counter fields are computed at least over the whole service multiplex. This is done by the processor 106 in the MBMS GW using the octet counter 108 and the packet counter 110. These counters may be hardware or software counters. In some embodiments of the invention, a plurality of different counters may be provided to deal with different frequencies, different MBSFN areas or the like.

In alternative implementations, corresponding octet and packet counters 112 and 114 in the MBMS over each individual service may also be calculated and signalled as a part of the SYNC protocol.

Additionally, the eNB must be able to differentiate between the services in the service multiplex and link together all the packets belonging to it - possible ways to signal this are e.g. the SYNC protocol, or an Ml-u interface PDU header. One possible method for connecting the packets of the service multiplex would be to insert the "timestamp" information to all packets, provided by time stamp functionality 116 in the MBMS GW, another would be to set up a separate "multiplex ID" provided by multiplex ID 118 functionality in the MBMS. As examples, the "timestamp" could be the "System Frame Number" (SFN), in which the first packet of the service multiplex is to be transmitted, or an absolute time reference to GPS (Global Positioning System) clock timing.

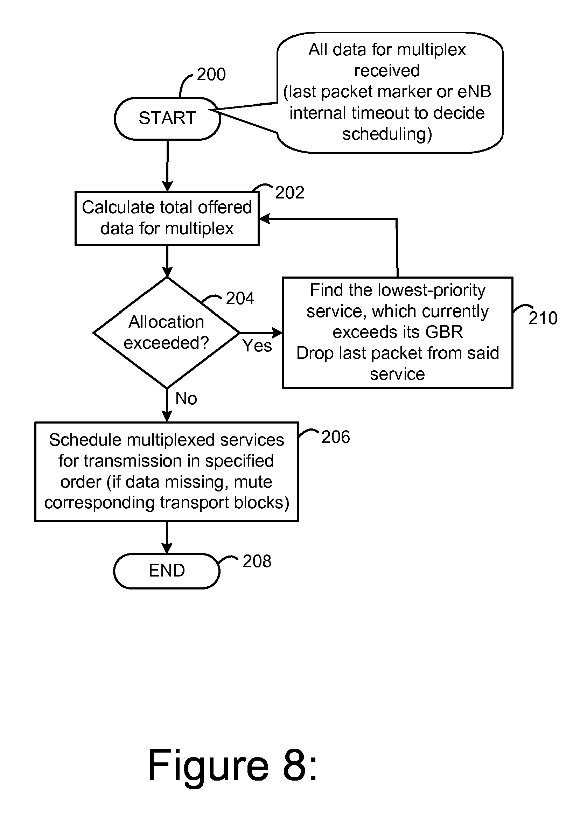

All eNB should follow a pre-determined algorithm to determine resource sharing between the services of the service multiplex. An example of such an algorithm is described in Figure 8 which shows a flow chart of dynamic service multiplexing scheduling example respecting GBR of each service

In the example algorithm:

1) Start the algorithm (referenced 200) after all data for the multiplex is received (either packet with last packet indicator received, or an eNB internal timeout to perform scheduling expires).

2) Compute the total offered data for the multiplex (referenced 202).

3) Determine if the total offered data exceeds the radio resource reservation (or available semi-static capacity or reserved capacity) for the multiplex (referenced 204).

4) If the total offered data does not exceed the radio resource reservation or available semi-static capacity (or reserved resources) for the multiplex, transmit as is. This means that the multiplexed services are scheduled for transmission in the specified order. If data is missing, then the corresponding transport blocks are muted (referenced 206)

5) The algorithm is then ended (referenced 208)

6) If the total offered data exceeds the resource reservation or available semi-static capacity for the multiplex find the lowest-priority service, which currently exceeds its guaranteed bitrate and remove the last packet from said service (referenced 210) and return to 2). In the case where there are two or more services which have the same priority, the packet will be dropped from the specified service. This could be for example the first or last in the designate transmission order.

In this way, in an example embodiment, all the services may be guaranteed to get capacity (or obtain reserved resources) up to their guaranteed bitrates, if they need it. If some services do not require capacity up to the GBR, the extra capacity becomes available to other services of the multiplex (resource sharing within the service multiplex).

In one modification to the above described algorithm, in point 6) the algorithm uses the available capacity (or resource reservation or reserved capacity) to determine the number of packets which need to be dropped so that this will be followed by the transmission of the data. The algorithm may use various rules to determine which packet or packets are to be dropped taking into account the priority of the service and the number of packet which are to be dropped. Thus for example if two packets are to be dropped, both may come from the lowest priority service or one could come from each of the two lowest priority services. The relative priority of the services and/or the absolute priority of the service may used in determining which packets are to be dropped.

This algorithm may be performed by processor 100 of an eNB at least partially or completely. In alternative embodiments of the invention, the algorithm may be carried out by other functionalities of the eNB.

To maintain the ability of eNBs to recover from packet losses on the Ml_u interface (especially without providing service-specific elapsed packet and octet counters), services within the same service multiplex may be concatenated. In this case the header information advising the start of a new MBMS service is embedded in RLC-PDU structure. As the starting and ending points of an individual service would not respect transport block borders, UEs need to receive some data of the previous or next service to collect all data. As a benefit of this approach, eNB recovery after data loss on Ml_u interface may be guaranteed the same way as in the case of sending just one service with semi-static allocation.

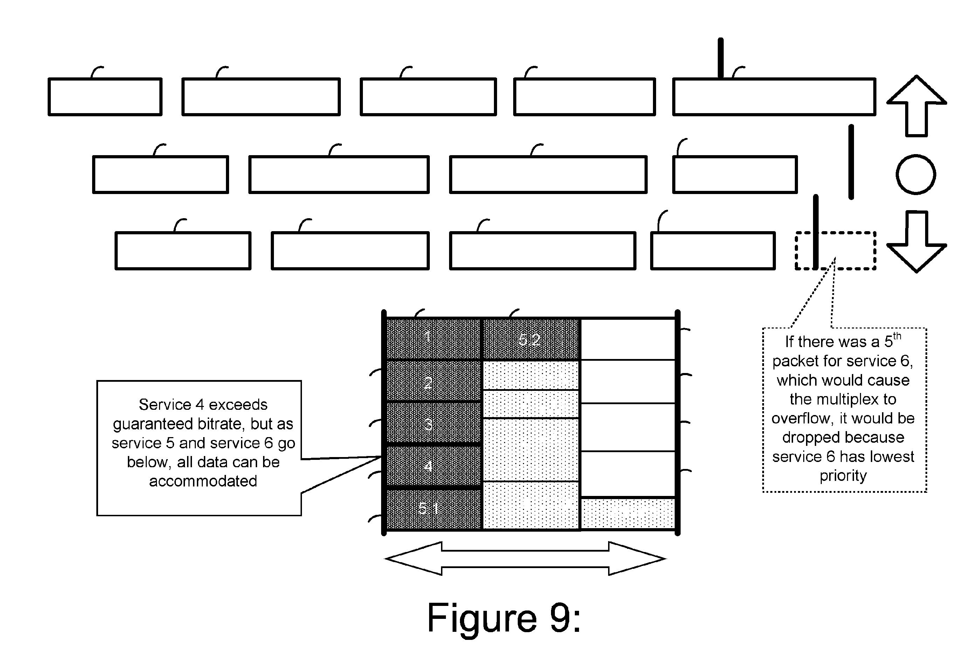

An example of data scheduling within a dynamic multiplex by an eNB is illustrated in Figure 9. Service 4 with data 220a-e, has high priority, service 5 with data 222a-d has medium priority and service 6 with data 224a-d has low priority. The transmission order of services is configured to eNB in numbered order (4, 5, 6). From the beginning of the first semi-statically allocated TTI, services 4, 5 and 6 are segmented and concatenated into the available space. Service 4 exceeds its GBR in this scheduling period. Services 5 and 6 offer data below GBR, and everything can be accommodated with some padding. In the dotted line alternative example service 6 would have offered one more packet, causing the amount of data for the multiplex to overflow. As service 6 has lowest priority among the three dynamically multiplexed services, the last packet of service 6 would in this case be dropped.

An example of a MAC and RLC PDU structure used in embodiments of the invention is described next. It should be appreciated that the following PDU structure is one way in which an embodiment of the invention can be implemented. Alternative embodiments of the invention can be implemented on the RLC level in a number of different ways.

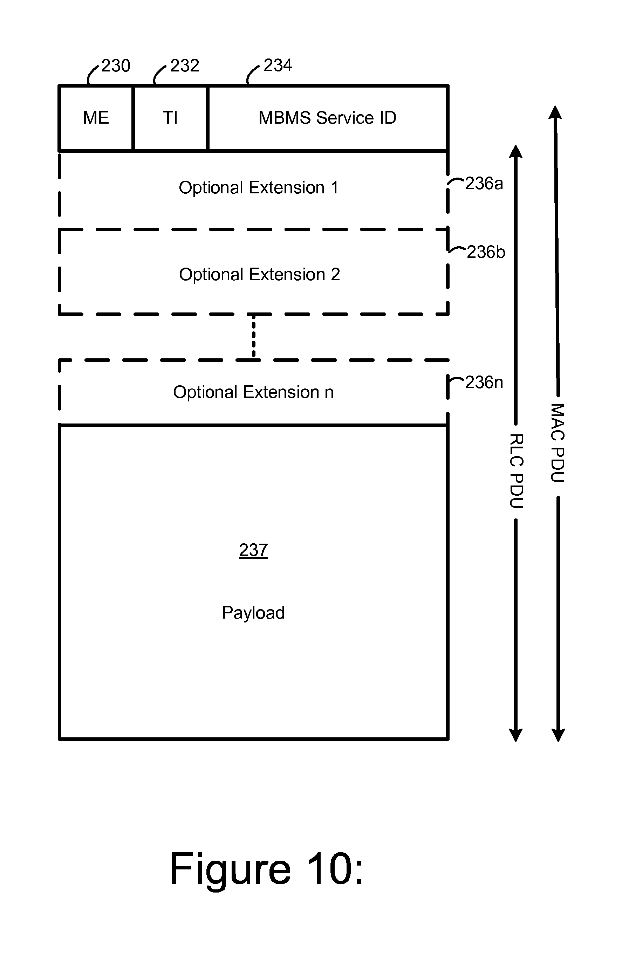

The formulation of the packet with this structure is done in the eNB and may be carried out by the processor 100.The high-level structure of the PDU is shown in Figure 10. The abbreviations used for the various information fields and octets are listed below. The data is arranged in the PDU in the order of the fields set out below

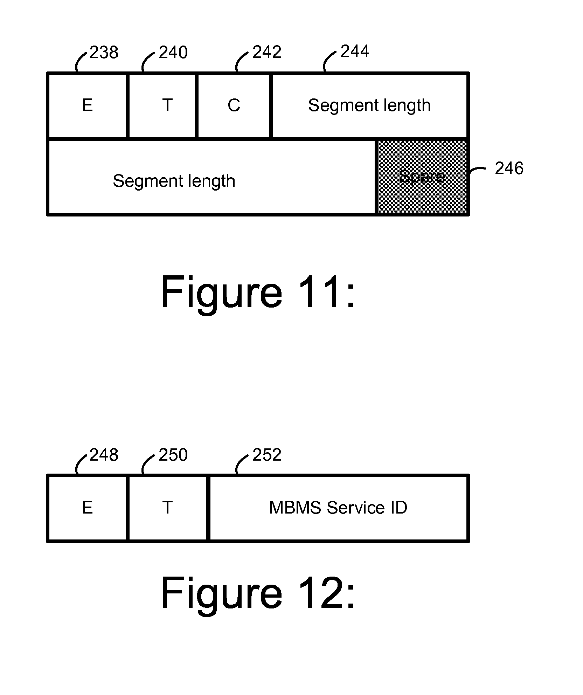

ME = MAC extension flag (referenced 230). If the ME flag is set, an optional RLC header extension follows, examples of which are shown in Figures 11 and 12.

TI = Tail Indicator Flag (referenced 232). The TI flag covers the case, where the last SDU exactly fills the complete PDU. This flag is set every time, when the SDU exactly ends in the end of the PDU. The following PDU starts with a dummy segment length indicator (zero-length segment) to produce the required exactly one length indicator per SDU to remain in sync.

MBMS Service ID = Identifier for MBMS Service (referenced 234). The MBMS Service ID in Figure 10 identifies the first MBMS service, which has data in the PDU.

This is followed by optional extension fields 1 to n (reference 236a-n). In other words there may be none, one or more optional extension fields. Examples of optional extension fields are shown in Figures 11 and 12. The Optional Extension field, of which there can be zero or more, can be one of two types: Length Indicator (Figure 11) or a new MBMS Service ID (Figure 12). The optional extension of Figure 11 is the length indicator optional extension and comprises:

E = RLC extension flag (referenced 238)

C = Continuation flag (referenced 240). If there is padding after the last SDU, C=0. If C=1 it means, that another SDU starts and continues until the end of the RLC-PDU.

T = Type flag (referenced 242)

Segment length 11 bits (enough for 2048 octets payload; current assumption 1444 max Transport Block size) - (referenced 244). A Length Indicator is inserted whenever an SDU ends within the current RLC-PDU.

There are some spare bits (referenced 246)

The MBMS service ID extension comprises the following fields:
E = RLC extension flag (referenced 248)
T = Type flag (referenced 250)

A MBMS service ID field (referenced 252). A new MBMS Service ID is inserted, when a new MBMS Service starts within the current RLC-PDU.

If E=1 in one of the optional extension fields, this means that there is another optional extension following. If E is not equal to one, this indicates that this is the last optional extension.

The T-flag signals, whether the present header extension is a segment length field (T=0) or a new MBMS Service ID (T=1, in case the service changes in the current RLC-PDU).

This is then followed by the payload 237.

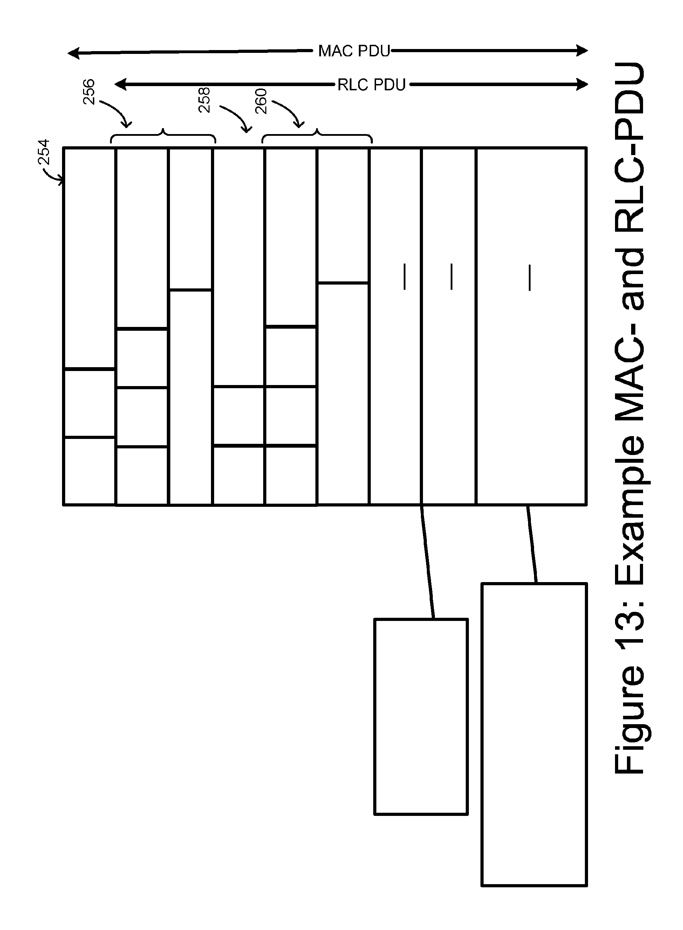

An example of a case, where a first service has the remainder of one SDU (SDU1) in a MAC-PDU, and second service continues with one complete SDU and the first fragment of a second SDU, is shown Figure 13. There is a first MBMS service ID 254 (as in the first line of Figure 10) for the first service followed by a first length indicator extension 256 for the first service. This is followed by a first MBMS service ID optional extension 258 followed by a second length indicator optional extension 260 for the second service. This is followed by SDU1 262 for service 1, and SDU2 264 and SDU 3 266 belonging to service 2. SDU 3 continues to the next PDU. If SDU3 ends here, the tail indicator TI would be set to 1 and a dummy LI length indicator would be inserted at the beginning of the next MAC-PDU.

If the scheduling information is transmitted to UEs as MBSFN transmission, requiring it to be bit-exactly the same from every eNB, the probability of correct reception of the amount of data and amount of packets per multiplexed MBMS Service on the M1_u interface should be improved for the participating eNBs, because if an eNB loses some data packets, it may be ambiguous, how to formulate the scheduling information to the UEs, who should begin reception at a certain point in time. An option is to repeat total octet- and packet counters per service one or more times after all the data for the service has been forwarded as a part of the SYNC protocol.

The embodiment described above builds upon the assumption that the MBMS GW node can construct the elapsed packet and elapsed octet counters of the multiplexed services in correct sequence, one service after another (the packets may arrive to eNBs in any order, as long as the SYNC header information forms the correct sequence). To accomplish this, the GW may also need to buffer the whole scheduling period before data can be forwarded.

It should be appreciated that in embodiments of the invention, the SYNC header information is provided by the MBMS GW 10 to the eNBs 16

An alternative embodiment to that of buffering of data in MBMS GW to achieve correctly sequenced SYNC header information is possible:

Elapsed packet and elapsed octet counters are calculated both over the service multiplex and over each individual service. All of this information is communicated to participating eNBs over the SYNC protocol by the MBMS GW 10. Now the eNBs would have adequate information to re-arrange the packets for transmission, even if they are transmitted as scattered from the MBMS GW. This may be performed by processor 100 which passes the packets to the transmitter 102 for transmission to the UE 20.

The elapsed packet counter is used to count the number of packets. Starting from e.g. zero, the elapsed packet counter is incremented for the header of each new packet, so the value of elapsed packet counter in second packet would be 1, in the third packet 2 and so on. In different embodiments the elapsed packet counter may or may not be reset in the beginning of a new scheduling period. Alternatively there can be a maximum value, after which counting re-starts from zero.

The elapsed octet counter is used to calculate the amount of data in packets, which have been transmitted. Starting from zero, the elapsed octet counter of the second packet will be set to the length of the first packet in octets (=elapsed number of octets). The length of the second packet in octets will be added to the elapsed octet counter so that the elapsed octet counter of the third packet will contain the combined length of the first and second packet.

In some embodiments of the invention, the term byte counter may be used instead of octet counter.

Together with the added security option of repeating octet- and packet counters per service described above, this alternative embodiment would enable another favourable option: The services of the service multiplex could also start only at determined points (border of addressable transport blocks), with some padding between the services. As a benefit, the scheduling information given to the UEs could point exactly to the start of each service. Thus the UE receives scheduling information from the eNB. This scheduling information is received by receiver 104 and passed to processor 105. The processor uses the scheduling information to control when the receiver receives the information. In the alternative, the information can be used by the processor 105 to speed up the processing of the received services. Also the header structure could follow exactly the same model for both semi-statically scheduled services and the dynamically scheduled services within a service multiplex, i.e. the MBMS Service ID in the optional part of the RLC-PDU header might not required.

It should be appreciated that the UE 20 will receive the same service transmitted by a plurality of the eNBs. The UE can use any suitable strategy for dealing with these multiple transmissions such as combining two or more transmissions, selecting the strongest transmission and so on.

The SYNC information can thus be transferred form the MBMS GW 10 to the eNBs in a SYNC header, a SYNC packet or with the MBMS service or services.

The SYNC information can include one or more of the following information:
- time stamp information (in some systems this is provided explicitly whilst in other systems this information may be implicitly implied by the timing of the SYNC information itself.
- MBMS multiplex ID (in some systems this is explicitly defined whilst in other systems this is implicitly defined.
- MBMS Service ID
- Elapsed packet over multiplex - that is a counter for packets of all multiplexed services which have been sent, incremented by one for each new packet

Elapsed octet over multiplex - that is a counter for the combined total number of octets which have been sent over all the multiplexed services, incremented by the length of the previous packet in octets (sets of 8 bits) for each new packet.
- Last packet flag (if the packet was the last packet).
- Elapsed packet over service - that is a counter for packets of the current service, incremented by one for each new packet.
- Elapsed octet over service - that is a counter for the number of octets of the current service, incremented by the length of the previous packet in octets for each new packet.
- Total packet over service - that is the total number of packets for a given service.
- Total octet over service - that is the total number of octets for a given service.

It should be appreciated that in embodiments of the invention, where more than one piece of SYNC information is provided, this information can be provided together or can be provided in different locations such as in different header and packets.

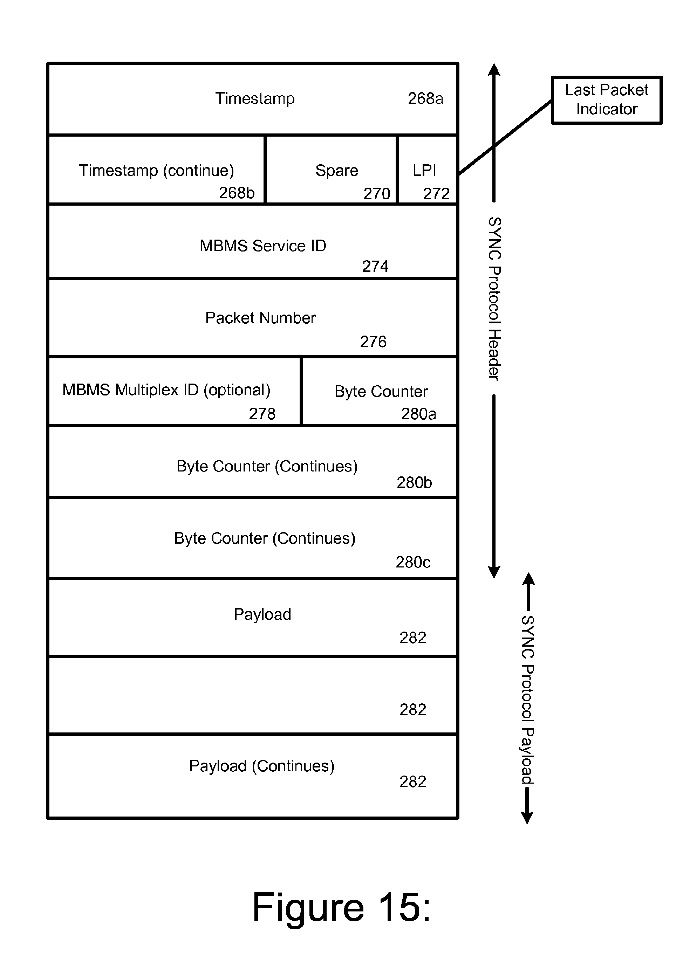

Figure 15 shows one example of a SYNC protocol header structure. The timestamp format is the SFN. This is just one example of a time stamp format. This is referenced 268 and is shown as being in a first part 268a and a second part 268b.

This is followed by some spare bits referenced 270.

This is followed by a LPI -last packet indicator 272 which will be set if the packet is a last packet.

This is followed by the MBMS service ID 274 and a packet number 274. The packet counter is 8 bits in this example meaning 255 packets per service per scheduling period is a maximum.

This is followed by the MBMS multiplex ID 278 which is optional depending on the embodiment of the invention - see the above table. Multiplex ID is not necessarily needed because when eNB and GW knows which services are multiplexed, Service ID is enough in the protocol. Therefore the Multiplex ID is marked as "(optional)". This has in this example four bits meaning 16 multiplexes are possible.

This is followed by a byte counter 280a-c. In this example the counter is 20bits meaning about IMBytes per scheduling period is a maximum. This is then followed by payload.

Embodiments of the invention may provide a variable bitrate, guaranteed per service, which can be supported in a distributed architecture. In some embodiments of the invention, the capacity or reserved resources to buffer over a scheduling period is used needed in all participating eNBs.

The arrangement of Figure 14 represents schematically embodiments of the present invention. It should be appreciated that one or more of the functionalities or parts described and/or shown may be implemented by a computer program. Accordingly embodiments of the present invention extend to a computer program comprising computer executable portions which may be executed when run on a computer or microprocessor or the like. Alternatively or additionally it should be appreciated that the arrangement shown in Figure 14 is schematic and a given entity may provide the function of one or more of the entities shown in Figure 14.

As discussed, the above described operations may require data processing in the various entities. The data processing may be provided by means of one or more data processors. Appropriate computer program code product may be used for implementing the embodiments when loaded to a computer. The program code product for providing the operation may be stored on and provided by with appropriate software in a server.

In this document, the term eNB has been used. It should be appreciated that embodiments of the present invention may be implemented with any other type of base station. It should be appreciated that eNB is a base station as proposed in the LTE proposals.

MBMS services can be any suitable service. By way of example, television or radio broadcasts may be provided as MBMS services. It should be appreciated that embodiments of the invention may have application with services other than MBMS services. It should be appreciated that embodiments of the invention may be used in contexts other than the LTE context of the above described embodiments.

The user equipment (or mobile station) can be any suitable form of user equipment such as a mobile station, mobile telephone, personal organiser, PDA (personal digital assistant), computer, portable computer, notebook, service receiver, MBMS service receiver, television receiver, radio receiver or the like.

Additional embodiments will now be described. In the various embodiments described hereinbelow, various algorithms and techniques are described for scheduling the transmission or forwarding of data provided as a service multiplex, e.g., with each of a plurality of services being forwarded or transmitted by a base station to one or more user equipments (UEs) or mobile stations. Techniques are provided for uniform scheduling of transmission among each of the base stations (or eNBs) within a MBSFN area, where the base stations may typically transmit data or packets to a group of UEs or mobile stations in a synchronized manner so as to achieve macro diversity gain. Thus, in an example embodiment, all base stations in a MBSFN area should use the same algorithm for dropping or discarding packets or data, to ensure that each base station transmits the same data to the UEs.

In an example embodiment, each service of the service multiplex may be transmitted or forwarded by a base station via an associated wireless (or radio) data bearer, e.g., service 1 transmitted via wireless data bearer 1, service 2 transmitted via wireless data bearer 2, ... service n transmitted or forwarded via wireless data bearer n, etc. A wireless data bearer may be, for example, a wireless communication connection associated (or allocated for) with a service, and having a group of wireless resources allocated to the connection (e.g., time and/or frequency resources).

According to an example embodiment, a variety of different criteria and techniques may be used to select a service (or bearer associated with the service) for a packet drop (e.g., to reduce the amount of data transmitted over the bearer) in the event that the offered data for a service multiplex exceeds the radio resource reservation or reserved data capacity for the service multiplex. The bearers of a service multiplex may be guaranteed bit rate (GBR) bearers (where a guaranteed bit rate is specified), non-GBR bearers (where a guaranteed bit rate may not be specified), or a combination of GBR and non-GBR bearers.

In the event of an overflow condition (e.g., a condition where the offered data for a service multiplex is greater than the resource reservation or reserved or allocated capacity for the service multiplex), a variety of criteria, either alone or in combination, may be used to select a bearer to drop a packet(s) to reduce the transmitted data on the bearers. These criteria may include, for example: 1) a priority of the service or associated bearer (e.g., may drop a packet from the lowest priority service or associated bearer); 2) numbers associated with or identifying each service, such as, for example, a temporary mobile group identifier (TMGI) for a MBMS service. For example, a service having a lowest (or a highest) TMGI or identifier may be selected to drop a packet or packets. 3) a packet loss rate (PLR) for the service or associated bearer. Other criteria may be used as well, such as, for example, a number of UEs receiving or using a service, which may be referred to as a reception or usage rate for each service (e.g., drop a packet from a service having a lowest usage rate or reception rate within the service multiplex.

In an example embodiment, the packet loss rate (PLR) may be determined based on, for example, O - a number of packets offered for each service (e.g., for the scheduling period or over a service history) and D - the number of packets previously dropped by the base station for each service (e.g., either during the scheduling period or periods or for the entire service history, whichever time period is selected for the measurement). For example, PLR may be determined based on the ratio D/O.

In another example embodiment, a service or associated bearer may be selected based on an adjusted PLR for each service, e.g., over a scheduling period or over a service period. The adjusted PLR may be determined, for example, based on the number of packets offered for a service, the number of packets for a service previously dropped by a base station, and a maximum PLR for the service. The adjusted PLR for a service may be determined or provided as the ratio of PLR (or D/O) for the service (e.g., either for a scheduling period or for the service history) to the maximum PLR for the service. In an example embodiment, the adjusted PLR may be determined as or based on: (D+1)/(O*Max. PLR), where D is the number of packets previously dropped by the base station for the service (e.g., during a scheduling period or cumulatively for the entire service history, or for multiple service periods), +1 considers the effect of dropping one more packet for the service, O is the number of offered packets for the service (e.g., during a scheduling period or cumulatively for the entire service history, or for multiple service periods), and Max. PLR is the maximum acceptable packet loss rate for the service (e.g., which may be specified by a network control entity to the base stations). As for the other criteria, the adjusted PLR may be calculated for a scheduling period, across multiple scheduling periods, or for an entire service history.

According to an example embodiment, the following algorithm or technique may be used:
1. After all data for this service multiplex for this scheduling period is received, update variable O (amount of offered data) for each service.
2. The total offered data for the service multiplex is computed or determined.
3. If total offered data for service multiplex doesn't exceed the radio resource reservation (or the reserved or allocated semi-static capacity) for the service multiplex, transmit as is. => END
4. Otherwise, (if total offered data for multiplex exceeds the radio resource reservation or allocated or reserved capacity for the service multiplex), then determine the service that, e.g., maximizes or minimizes a well-specified criterion in terms of resulting packet loss rate compared to the maximum PLR -QoS parameter for the service. For example, the adjusted PLR may be determined for each service, and the service having a lowest adjusted PLR may be selected for packet drop. For example, the service (or associated bearer) having a lowest adjusted PLR may typically be the service (or associated bearer) having the fewest previous packet drops by the base station, relative to the maximum PLR for the service. As noted, the adjusted PLR may be determined as or based on, for example: (D+1) / (O * PLR), which may be the ratio of realized packet loss rate to the maximum PLR (a QoS parameter received by the base station from a network control entity for each service), over the services of the multiplex.
5. For the selected service, drop the last (or most recently received) packet, and set D=D+1. Return to step 2.

As noted, each service in a service multiplex may be transmitted via an associated bearer. Each bearer may be a GBR bearer, or a non-GBR bearer, for example. According to one example embodiment, the algorithm described above (steps 1) - 5) ) may applied to those GBR bearers that exceed their maximum bit rate (or exceed their GBR). For example, selecting a service for packet drop may include: identify one or more services (of the service multiplex) that would exceed the maximum bit rate (or guaranteed bit rate) specified for the service for a scheduling period (or periods) based on the amount of data offered for the service for such period (e.g., assuming that all offered data for the service is transmitted by the base station); determine a packet loss rate or adjusted packet loss rate for each of the identified services that would exceed their maximum or guaranteed bit rate; and selecting one of the identified services based on the packet loss rate, adjusted packet loss rate, priority of each service, an identifier for each service (e.g., TMGI), or a combination thereof. Thus, where there are at least some GBR bearers for the service multiplex, each base station may select a service for packet drop (based on one or more criteria, such as priority, PLR or adjusted PLR, service identifier, etc.) from a subset of services that would exceed their maximum or guaranteed packet rate for the scheduling period.

In another alternative embodiment, e.g., in the case of a combination of GBR bearers and non-GBR bearers (or in a case of just GBR bearers) in a service multiplex, it may first be determined if there are any GBR bearers that would exceed their maximum bit rate for the scheduling period. If so, then the criteria is applied as described above to select a service for packet drop. If none of the GBR bearers would exceed their maximum bit rate for the scheduling period, then the criteria (e.g., priority, PLR or adjusted PLR, service identifier, combination thereof, etc.) may then be applied to all bearers to select a service for packet drop.

Alternatively, all bearers (GBR and non-GBR) may be treated the same, and one of them selected for packet drop based on the criteria, regardless as to whether one or more GBR bearers may exceed their maximum or guaranteed bit rate.

According to an example embodiment, various criteria may be used in combination to select a service (or associated bearer) for packet drop. A number of different combinations may be used, for example.

1) a packet loss rate (or adjusted packet loss rate) for each service as a first criteria; a priority for each service as a second criteria, if necessary (e.g., if the two services having a lowest adjusted PLR have the same adjusted PLR, then, as a tiebreaking criteria, the service having a lower priority may be selected for packet drop); and, an identifier for each service, such as a TMGI for each service, if necessary (e.g., if the services have the same PLR, such as in the case where no packets have been dropped, and all or some services have the same priority), then the service having the lowest (or highest) service identifier, such as TMGI for example, may be selected for packet drop. Note this last criteria, use of a service identifier, may be any selected criteria to operate as a tiebreaker, so long as all base stations in the MBSFN area use the same algorithm and tiebreaker to select the same service for packet drop.

2) a priority of each service as a first criteria; a packet loss rate (or adjusted PLR) of each service as a second criteria, if necessary (e.g., if two or more services have the same adjusted lowest PLR, then use the service priority to select a service for packet drop); and a service identifier such as a TMGI for each service, if necessary as an additional tiebreaker. These are merely some examples where a combination of criteria may be used to select a service for packet drop for multiplexed MBMS services, e.g., in the event of an overflow where offered data for a service multiplex exceeds the radio resource reservation or reserved or allocated capacity for the service multiplex.

As noted above, the various criteria (or other parameters) for selecting a bearer or service to drop a packet, may be measured over a scheduling period, over multiple scheduling periods, or over an entire service history, according to different example embodiments. For example, to determine a PLR or adjusted PLR, the base station should keep track of the values for O (amount of offered data or number of offered packets) and D (number of previously dropped packets) for each service. In the case where PLR or adjusted PLR is determined only over a scheduling period, this may be considered a memoryless calculation, since the BS does not need to know or keep track of the total amount of offered data (O) or number of previously discarded packets (D) during previous scheduling periods. However, if a PLR or adjusted PLR is determined or calculated over multiple scheduling periods or even over an entire service history, then the base station should maintain an accurate running count for O and D, over such period. If a base station loses count of either O or D in such a case (or is unable to determine these values), this can result in the base station making an incorrect selection as to which service should drop a packet, which may cause the base station to drop a packet from a different (or incorrect) service as compared to other base stations in the MBSFN area. In such a scheduling period, the base stations may not transmit the same data, and diversity may be lost.

Therefore, according to an example embodiment, a network control entity (e.g., a MBMS GW 10, Figure 2, and via the MCE if necessary) may, from time to time, send to one or even all base stations in the MBFSN area updated values for variables O and D (as example updated parameters), e.g., via the SYNC protocol. Also, in one example embodiment, a base station may be able request the network control entity to transmit updated values for O and D (e.g., in the case where the base station may have lost track of one or both of these values). This may allow base stations in a MBSFN area to remain synchronized, especially in the case where parameters (such as O and D) that may be used to make service selections for packet drop are measured over a time period that is greater than one scheduling period (e.g., over multiple scheduling periods, or over an entire service history for a service). Or, the network control entity may send a signal to the base stations to reset the variables O and D to known or predetermined values, or to reset these variables using a known algorithm, e.g., re-initialize the variable D e.g. to Round(O*PLR).

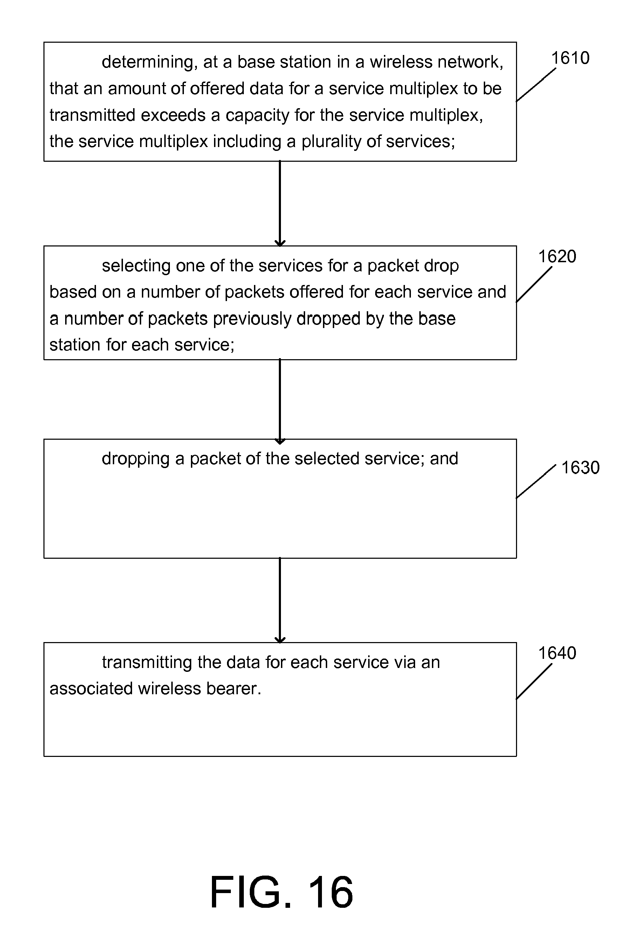

Figure 16 is a flow chart illustrating operation of a base station according to an example embodiment. Operation 1610 may include determining, at a base station in a wireless network, that an amount of offered data for a service multiplex to be transmitted exceeds a radio resource reservation or allocated capacity for the service multiplex, the service multiplex including a plurality of services; Operation 1620 may include selecting one of the services for a packet drop based on a number of packets offered for each service and a number of packets previously dropped by the base station for each service; Operation 1630 may include dropping a packet of the selected service; and Operation 1640 may include transmitting the data for each service via an associated wireless bearer.

In an example embodiment, operation 1620 may include selecting one of the services for a packet drop based on a number of packets received for each service and a number of packets previously dropped for each service for a scheduling period.

In an example embodiment, operation 1620 may include selecting one of the services for a packet drop based on a number of packets received for each service and a number of packets previously dropped for each service for a service history.

In an example embodiment, operation 1610 may include determining, at the base station in the wireless network, that the amount of offered data for the service multiplex to be transmitted exceeds a radio resource reservation or reserved or allocated capacity for the service multiplex for a scheduling period, the service multiplex including a plurality of services; and wherein operation 1620 may include selecting one of the services for a packet drop based on a number of packets offered for each service for the scheduling period and the number of packets previously dropped by the base station for each service during the scheduling period.

In an example embodiment, operation 1620 may include selecting one of the services for a packet drop based on a number of packets offered for each service for a service history and the number of packets previously dropped by the base station for each service for the service history; and wherein the method of Figure 16 may further include receiving, at the base station from a network entity, updated values for the number of packets offered and the number of packets previously dropped for each service.

In an example embodiment, operation 1620 may include determining a packet loss rate for each service for a service history; and selecting one of the services for a packet drop that has a lowest packet loss rate.

In an example embodiment, operation 1620 may include determining a packet loss rate for each service over a scheduling period; and selecting one of the services for a packet drop that has a lowest packet loss rate.

In the method of Figure 16, the packet loss rate may be calculated based on the ratio D/O, where D is the number of dropped packets for the service during a scheduling period, and O is the number of offered packets for the service for the scheduling period.

In the method of Figure 16, the packet loss rate may be calculated based on D/O, where D is the number of dropped packets for the service during a service history, and O is the number of offered packets for the service for the service history.

In an example embodiment, operation 1620 may include determining an adjusted packet loss rate for each service over a scheduling period, the adjusted packet loss rate based upon the number of packets offered for a service, the number of packets for a service dropped by the base station for a scheduling period and a maximum acceptable packet loss rate for the service; and selecting one of the services for a packet drop that has a lowest adjusted packet loss rate.

In the method of Figure 16, the packet loss rate may be an adjusted packet loss rate that is calculated based on: (D+1)/(O*Max. PLR), where D is the number of previously dropped packets for the service, +1 considers the effect of dropping one more packet for the service, O is the number of offered packets for the service, and Max. PLR is the maximum acceptable packet loss rate for the service.

According to an example embodiment, an apparatus may include a processor, the processor configured to: determine, at a base station in a wireless network, that an amount of offered data for a service multiplex to be transmitted exceeds a radio resource reservation or allocated or reserved capacity for the service multiplex, the service multiplex including a plurality of services; select one of the services for a packet drop based on a number of packets offered for each service and a number of packets previously dropped by the base station for each service; drop a packet of the selected service; and transmit the data for each service via an associated wireless bearer.

In an example embodiment, the apparatus may further include a wireless transceiver, and further wherein the processor may be configured to transmit comprises the processor configured to transmit, via the wireless transceiver, the data for each service via an associated wireless bearer.

In an example embodiment of the apparatus, the processor may be configured to identify one or more of the services that would exceed a maximum bit rate specified for the service for a scheduling period based on the amount of offered data for the service; determine a packet loss rate for each of the identified services; and select one of the identified services for packet drop having a lowest packet loss rate.

In an example embodiment of the apparatus, the processor may be further configured to select one of the identified services for packet drop having a lowest priority if two or more services have substantially a same packet loss rate.

In an example embodiment of the apparatus, the processor may be further configured to use the following as additional criteria to select one of the identified services for packet drop of there are two more identified services having a same packet loss rate: priority of each service, and/or an identifier for each service.

In an example embodiment, the processor configured to determine a packet loss rate for each of the identified services comprises the processor being configured to determine an adjusted packet loss rate for each of the identified services over a scheduling period, the adjusted packet loss rate based upon the number of packets offered for a service, the number of packets for a service dropped by the base station for a scheduling period and a maximum acceptable packet loss rate for the service.

In an example embodiment of the apparatus, the adjusted packet loss rate is calculated based on: (D+1)/(O*Max. PLR), where D is the number of previously dropped packets for the service, +1 considers the effect of dropping one more packet for the service, O is the number of offered packets for the service, and Max. PLR is the maximum acceptable packet loss rate for the service.

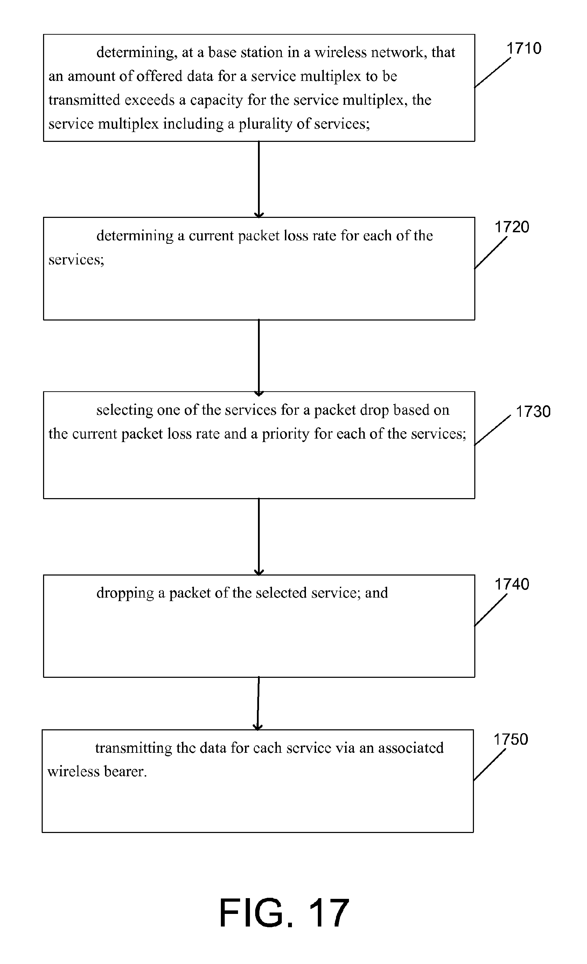

Figure 17 is a flow chart illustrating operation of a base station according to an example embodiment. Operation 1710 may include determining, at a base station in a wireless network, that an amount of offered data for a service multiplex to be transmitted exceeds a radio resource reservation or capacity for the service multiplex, the service multiplex including a plurality of services; Operation 1720 may include determining a current packet loss rate for each of the services; Operation 1730 may include selecting one of the services for a packet drop based on the current packet loss rate and a priority for each of the services; Operation 1740 may include dropping a packet of the selected service; and Operation 1750 may include transmitting the data for each service via an associated wireless bearer.

In an example embodiment of the flow chart of Figure 17, the packet loss rate may be calculated based on a ratio D/O, where D is the number of packets dropped by the base station for the service for a scheduling period, and O is the number of offered packets for the service for the scheduling period.

In an example embodiment of the flow chart of Figure 17, the packet loss rate may be calculated based on D and O, where D is the number of packets dropped by the base station for the service, and O is the number of offered packets for the service; wherein the method further includes: receiving, at the base station, updated values for D and O for each service; and determining the packet loss rate for each service based on the received updated values for D and O .

In an example embodiment of the flow chart of Figure 17, the packet loss rate is calculated based on D/O, where D is the number of dropped packets for the service during a scheduling period, and O is the number of offered packets for the service for the service history.

In an example embodiment of the flow chart of Figure 17, the packet loss rate comprises an adjusted packet loss rate that is determined as a ratio of a current packet loss rate for the service measured over a scheduling period to a maximum acceptable packet loss rate for the service.

In an example embodiment of the flow chart of Figure 17, the packet loss rate comprises an adjusted packet loss rate that is determined as a ratio of a current packet loss rate for the service measured over a service history to a maximum acceptable packet loss rate for the service.

In an example embodiment, operation 1730 may include selecting, based on a first criteria, one of the services for a packet drop having a lowest current packet loss rate within the service multiplex; and selecting, based on a second criteria, one of the services for packet drop having a lower priority if two or more services having the lowest current packet loss rate have the same packet loss rate.

In an example embodiment, operation 1730 may include selecting, based on a first criteria, one of the services for a packet drop having a lowest priority; and selecting, based on a second criteria one of the services for packet drop having a lowest packet loss rate if two or more services having the lowest priority have the same priority.

In an example embodiment, operation 1730 may include selecting one of the services for packet drop based on: a packet loss rate for each service as a first criteria; a priority of each service as a second criteria, if necessary; and one or more identifiers associated with each of the services as a third criteria, if necessary.

In an example embodiment, operation 1730 may include selecting one of the services for packet drop based on: a priority of each service as a first criteria; a packet loss rate for each service as a second criteria, if necessary; and one or more identifiers associated with each of the services as a third criteria, if necessary. In an example embodiment, the one or more identifiers associated with each of the services may include a temporary mobile group identifier (TMGI) that identifies each service, each service comprising a MBMS (Multimedia Broadcast/Multicast Service) service. In an example embodiment, the selecting based on one or more identifiers as a third criteria, if necessary, includes selecting a service having a lowest identifier.

In an example embodiment, the selecting based on one or more identifiers as a third criteria, if necessary, may include selecting a service having a highest identifier.

According to another example embodiment, an apparatus may include a processor, the processor being configured (e.g., programmed) to: determine, at a base station in a wireless network, an amount of offered data for a service multiplex, the service multiplex including a plurality of services; determine if the amount of offered data for a scheduling period exceeds a radio resource reservation or allocated or reserved capacity for the service multiplex; transmit the offered data for each of the services via an associated bearer without dropping a packet if the amount of offered data does not exceed the radio resource reservation or capacity for the service multiplex; and perform the following if the amount of offered data for the service multiplex exceeds the radio resource reservation or capacity: select one of the services for a packet drop based on a packet loss rate for each service for the scheduling period; drop a packet of the selected service; and transmit the offered data for each of the services via an associated bearer, including transmitting the data for the selected service after dropping the packet.

The apparatus may further include a wireless transceiver and a memory.

The apparatus wherein the processor being configured to transmit the offered data for each service may include the processor transmitting, via a wireless transceiver, the offered data for each service via an associated bearer.

The apparatus wherein the processor being configured to select may include the processor being configured to select one of the services having a lowest packet loss rate, the packet loss rate being calculated based on the ratio D/O, where D is the number of dropped packets for the service during a scheduling period, and O is the number of offered packets for the service for the scheduling period.

The apparatus wherein the processor being configured to select may include the processor being configured to select one of the services having a lowest adjusted packet loss rate, the adjusted packet loss rate being determined as a ratio of a current packet loss rate for the service measured over a scheduling period to a maximum acceptable packet loss rate for the service.

The apparatus wherein the processor being configured to select may include the processor being configured to select one of the services of the service multiplex having a lowest adjusted packet loss rate that is calculated based on: (D+1)/(O*Max. PLR), where D is the number of packets previously dropped by the base station for the service, +1 considers the effect of dropping one more packet for the service, O is the number of offered packets for the service, and Max. PLR is the maximum acceptable packet loss rate for the service.

The apparatus wherein the processor being configured to select may include the processor being configured to select one of the services for packet drop based on: a packet loss rate for each service as a first criteria; a priority of each service as a second criteria, if necessary; and an identifier associated with the service as a third criteria, if necessary.

The apparatus wherein the processor being configured to select may include the processor being configured to select one of the services for packet drop based on: a priority of each service as a first criteria; and a packet loss rate for each service as a second criteria, if necessary.

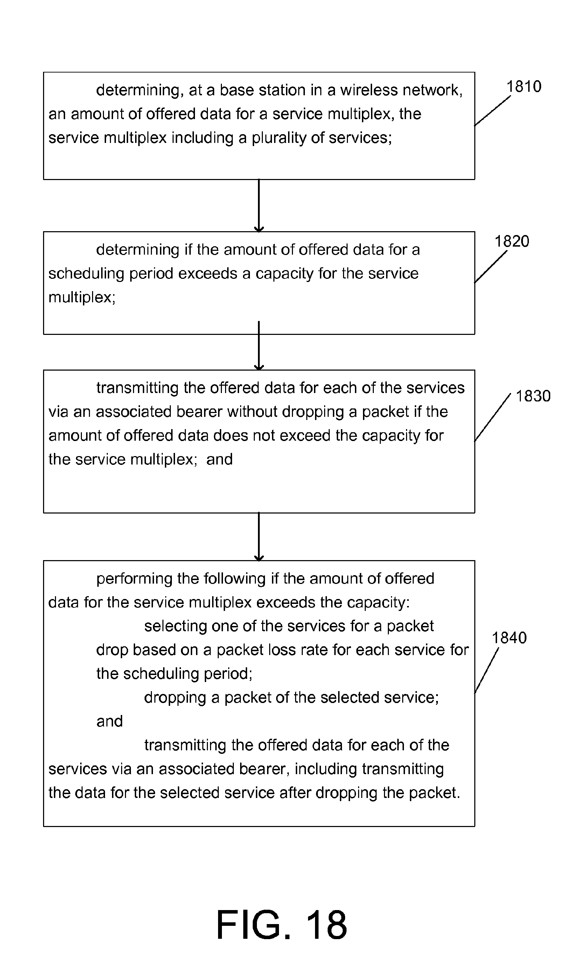

Figure 18 is a flow chart illustrating operation of a base station according to yet another example embodiment. Operation 1810 may include determining, at a base station in a wireless network, an amount of offered data for a service multiplex, the service multiplex including a plurality of services; Operation 1820 may include determining if the amount of offered data for a scheduling period exceeds a radio resource reservation or allocated or reserved capacity for the service multiplex; Operation 1830 may include transmitting the offered data for each of the services via an associated bearer without dropping a packet if the amount of offered data does not exceed the radio resource reservation or capacity for the service multiplex; and Operation 1840 may include performing the following if the amount of offered data for the service multiplex exceeds the radio resource reservation or capacity: selecting one of the services for a packet drop based on a packet loss rate for each service for the scheduling period; dropping a packet of the selected service; and transmitting the offered data for each of the services via an associated bearer, including transmitting the data for the selected service after dropping the packet.

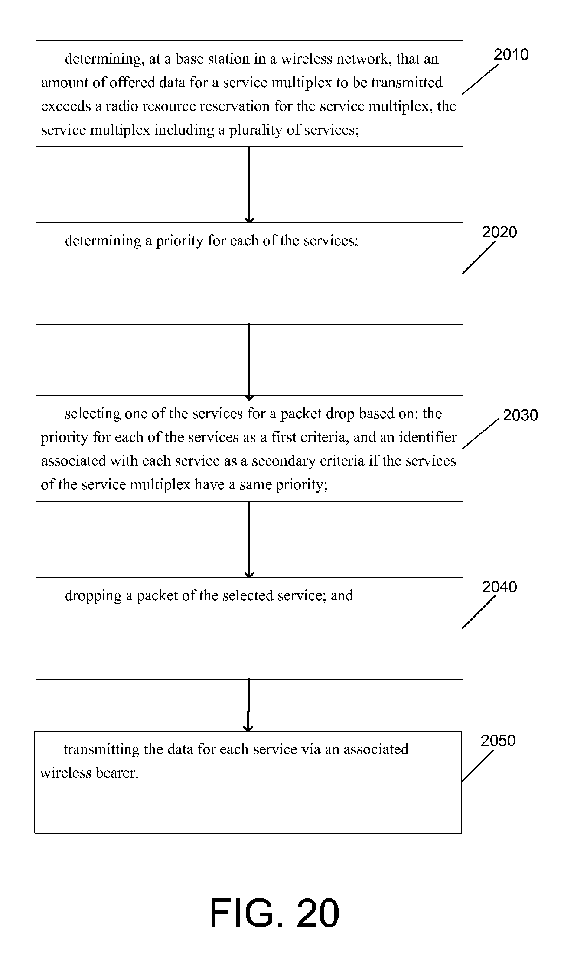

Figure 20 is a flow chart illustrating operation of a base station according to yet another example embodiment. All of these operations may be performed by a processor, for example.

Operation 2010 may include determining, at a base station in a wireless network, that an amount of offered data for a service multiplex to be transmitted exceeds a radio resource reservation for the service multiplex, the service multiplex including a plurality of services; Operation 2020 may include determining a priority for each of the services; Operation 2030 may include selecting one of the services for a packet drop based on: the priority for each of the services as a first criteria, and an identifier associated with each service as a secondary criteria if the services of the service multiplex have a same priority; Operation 2040 may include dropping a packet of the selected service; and Operation 2050 may include transmitting (e.g., by a wireless transceiver via control of a processor) the data for each service via an associated wireless bearer.

In an example embodiment, the identifier for each service may include at least one of a TMGI, a MBMS service ID, and/or a bearer ID for each service.

An apparatus may include a processor, the processor configured to: determine, at a base station in a wireless network, that an amount of offered data for a service multiplex to be transmitted exceeds a radio resource reservation for the service multiplex, the service multiplex including a plurality of services; determine a priority for each of the services; select one of the services for a packet drop based on: the priority for each of the services as a first criteria, and an identifier associated with each service as a secondary criteria if the services of the service multiplex have a same priority; drop a packet of the selected service; and transmit the data for each service via an associated wireless bearer.

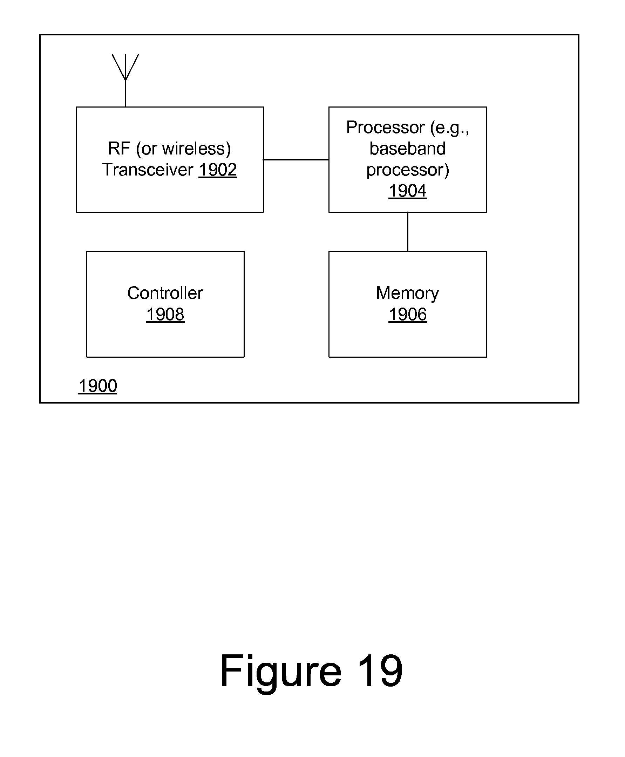

Figure 19 is a block diagram of a wireless node 1900 according to an example embodiment, such as a base station or eNB, or mobile station or user equipment, or other wireless node or device. The wireless node 1900 may include, for example, an RF (radio frequency) or wireless transceiver 1902, including a transmitter to transmit signals and a receiver to receive signals, a processor 1904 to execute instructions or software and control transmission and receptions of signals, and a memory 1906 to store data and/or instructions.

Processor 1904 may also make decisions or determinations, generate frames or messages for transmission, decode received frames or messages for further processing, and other tasks or functions described herein. Processor 1904, which may be a baseband processor, for example, may generate messages, packets, frames or other signals for transmission via wireless transceiver 1902. Processor 1904 may control transmission of signals or messages over a wireless network, and may receive signals or messages, etc., via a wireless network (e.g., after being down-converted by wireless transceiver 1902, for example). Processor 1904 may, thus, transmit signals or packets via wireless link via wireless transceiver 1902. Processor 1904 may be programmable and capable of executing software or other instructions stored in memory or on other computer media to perform the various tasks and functions described above, such as one or more of the tasks or methods described above. Processor 1904 may be (or may include), for example, hardware, programmable logic, a programmable processor that executes software or firmware, and/or any combination of these. Using other terminology, processor 1904 and transceiver 1902 together may be considered as a wireless transmitter/receiver system, for example.

In addition, referring to Figure 19, a controller (or processor) 1908 may execute software and instructions, and may provide overall control for the node 1900, and may provide control for other systems not shown in Figure 19, such as controlling input/output devices (e.g., display, keypad), and/or may execute software for one or more applications that may be provided on node 1900, such as, for example, an email program, audio/video applications, a word processor, a Voice over IP application, or other application or software.

In addition, a storage medium may be provided that includes stored instructions, which when executed by a controller or processor may result in the processor 1904, or other controller or processor, performing one or more of the functions or tasks described above.

Implementations of the various techniques described herein may be implemented in digital electronic circuitry, or in computer hardware, firmware, software, or in combinations of them. Implementations may implemented as a computer program product, i.e., a computer program tangibly embodied in an information carrier, e.g., in a machine-readable storage device or in a propagated signal, for execution by, or to control the operation of, a data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in, special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

In general, the various embodiments may be implemented in hardware or special purpose circuits, software (computer readable instructions embodied on a computer readable medium), logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

## Claims

1. A method comprising:
determining, at a base station in a wireless network, that an amount of offered data for a service multiplex to be transmitted exceeds a radio resource reservation for the service multiplex, the service multiplex including a plurality of services;
selecting one of the services for a packet drop based on a number of packets offered for each service and a number of packets previously dropped by the base station for each service;
dropping a packet of the selected service; and
transmitting the data for each service via an associated wireless bearer.

2. The method of claim 1 wherein the selecting further comprising:
identifying one or more of the services that would exceed a maximum bit rate specified for the service for a scheduling period based on the amount of offered data for the service;
determining a packet loss rate for each of the identified services; and
selecting one of the identified services for packet drop having a lowest packet loss rate.

3. The method of claim 2 wherein the selecting further comprising:
selecting one of the identified services for packet drop having a lowest priority if two or more services have substantially a same packet loss rate.

4. The method of claim 2 wherein the selecting further comprising:
using the following as additional criteria to select one of the identified services for packet drop if there are two more identified services having a same packet loss rate: priority of each service, and/or an identifier for each service.

5. The method of claim 1 wherein the selecting further comprising:
selecting one of the services for a packet drop based on a number of packets received for each service and a number of packets previously dropped for each service for a scheduling period or for a service history.

6. The method of claim 1 wherein the selecting further comprising:
determining a packet loss rate for each service for a service history or over a scheduling period; and
selecting one of the services for a packet drop that has a lowest packet loss rate.

7. The method of claim 1 wherein the selecting further comprising:
determining an adjusted packet loss rate for each service over a scheduling period, the adjusted packet loss rate based upon the number of packets offered for a service, the number of packets for a service dropped by the base station for a scheduling period and a maximum acceptable packet loss rate for the service; and
selecting one of the services for a packet drop that has a lowest adjusted packet loss rate.

8. A method comprising:
determining, at a base station in a wireless network, an amount of offered data for a service multiplex, the service multiplex including a plurality of services;
determining if the amount of offered data for a scheduling period exceeds a radio resource reservation for the service multiplex;
transmitting the offered data for each of the services via an associated bearer without dropping a packet if the amount of offered data does not exceed the radio resource reservation for the service multiplex; and
performing the following if the amount of offered data for the service multiplex exceeds the radio resource reservation:
selecting one of the services for a packet drop based on a packet loss rate for each service for the scheduling period; and
dropping a packet of the selected service; and
transmitting the offered data for each of the services via an associated bearer, including transmitting the data for the selected service after dropping the packet.

9. The method of claim 8 wherein the selecting further comprising:
selecting one of the services having a lowest packet loss rate, the packet loss rate being calculated based on the ratio D/O, where D is the number of dropped packets for the service during a scheduling period or service history, and O is the number of offered packets for the service for the scheduling period or service history.

10. The method of claim 8 wherein the selecting further comprising selecting one of the services for packet drop based on:
a priority of each service as a first criteria; and
a packet loss rate for each service as a second criteria, if necessary.

11. The method of claim 8 wherein the packet loss rate comprises an adjusted packet loss rate that is determined as a ratio of a current packet loss rate for the service measured over a scheduling period or a service history to a maximum acceptable packet loss rate for the service.

12. The method of claim 8 wherein the selecting further comprising:
selecting, based on a first criteria, one of the services for a packet drop having a lowest current packet loss rate within the service multiplex; and
selecting, based on a second criteria, one of the services for packet drop having a lower priority if two or more services having the lowest current packet loss rate have the same packet loss rate.

13. The method of claim 8 wherein the selecting further comprising:
selecting, based on a first criteria, one of the services for a packet drop having a lowest priority; and
selecting, based on a second criteria one of the services for packet drop having a lowest packet loss rate if two or more services having the lowest priority have the same priority.

14. A method comprising:
determining, at a base station in a wireless network, that an amount of offered data for a service multiplex to be transmitted exceeds a radio resource reservation for the service multiplex, the service multiplex including a plurality of services;
determining a priority for each of the services;
selecting one of the services for a packet drop based on: the priority for each of the services as a first criteria, and an identifier associated with each service as a secondary criteria if the services of the service multiplex have a same priority;
dropping a packet of the selected service; and
transmitting the data for each service via an associated wireless bearer.

15. The method of claim 14 wherein the identifier for each service comprises at least one of a temporary mobile group identifier (TMGI), a Multimedia Broadcast/Multicast Service identifier (MBMS service ID), and/or a bearer ID for each service.
